# EUROPÄISCHE PATENTSCHRIFT

(11) **EP 4 060 223 B1**
(45) Veröffentlichungstag und Bekanntmachung des Hinweises auf die Patenterteilung: **07.06.2023**
(21) Anmeldenummer: 22155378.7
(22) Anmeldetag: 07.02.2022
(51) Int. Cl.: F21V 5/00, F21V 19/00, F21V 17/16, F21S 8/00, G02B 3/00, F21V 23/06, F21V 15/01, F21V 13/04, F21V 7/00, F21Y 103/10, F21Y 115/10

(54) **ABDECKUNG FÜR EIN LEUCHTMITTEL SOWIE LEUCHTE MIT ABDECKUNG**
COVER FOR A LIGHTING MEANS AND LUMINAIRE WITH COVER
COUVERCLE POUR UN MOYEN D'ÉCLAIRAGE, AINSI QUE LUMINAIRE POURVU DE COUVERCLE

(30) Priorität: 18.03.2021 DE 102021106644
(43) Veröffentlichungstag der Anmeldung: 21.09.2022
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Bäcker, Tobias, 59514 Welver-Berwicke (DE)
(74) Vertreter: Ostriga Sonnet Wirths & Vorwerk

(56) Entgegenhaltungen:
- DE-U1-202015 009 561
- US-A1- 2016 003 454
- US-A1- 2016 215 955

## Beschreibung

Die Erfindung betrifft zunächst eine Abdeckung für eine Leiterplatte, die LED-Lichtquellen und Anschlussklemmen für Anschlusskabel auf ihrer Oberseite trägt,
- mit einer von der Abdeckung ausgebildeten Aufnahmekammer für die Leiterplatte,
- mit einer Lichteintrittsseite der Abdeckung, die der Aufnahmekammer zugewandt ist,
- mit einer Lichtaustrittsseite der Abdeckung, die der Lichteintrittsseite gegenüberliegt,
- mit Befestigungsmitteln zur Anordnung der Abdeckung an einem Leuchtenbauteil,
- mit Optikelementen, die über den LED-Lichtquellen zur Anordnung kommen und das emittierte Licht richten, wobei
- die Abdeckung zwischen zwei benachbarten Optikelementen eine Ausnehmung für zumindest eine Anschlussklemme ausbildet,
- die Ausnehmung von einem durch die Abdeckung ausgebildeten Rahmen umgeben ist, und wobei
- die Abdeckung auf ihrer Lichtaustrittsseite Anordnungsmittel und Anordnungsflächen für zumindest ein lichtbeeinflussendes Bauteil, insbesondere ein Rasterbauteil, trägt,
- die Abdeckung auf ihrer Lichtaustrittsseite wenigstens eine Halterung für ein Anschlusskabel trägt, wobei die Halterung insbesondere außerhalb der Anordnungsflächen für das lichtbeeinflussende Bauteil angeordnet ist.

Gattungsgemäße Abdeckungen sind aus dem Stand der Technik in vielerlei Formen bekannt. Beispielweise hat die Anmelderin selbst in DE 20 2019 106 117 U1 einen solchen Stand der Technik geschaffen. Der Einsatz von LEDs als Lichtquelle in Leuchten benötigt regelmäßig solche Abdeckungen, um das Abstrahlverhalten der LEDs durch Optikelemente an den jeweiligen Leuchtenzweck anzupassen. Darüber hinaus dienen die Abdeckungen in der Regel dazu, die Leuchte in Lichtaustrittsrichtung zu verschließen und optisch ansprechend zu gestalten.

Im Fokus vieler Anstrengungen stehen die Effizienz in der Leuchtenfertigung, insbesondere die Vereinfachung der Leuchtenmontage, wobei die durch Verwendung von LED-Lichtquelle geschaffenen, neuen Gestaltungsmöglichkeiten die Leuchtenmontage grundsätzlich verändern.

Die Anmelderin schlägt in DE 20 2019 106 117 U1 beispielsweise vor, die auf einem Leuchtenbauteil aufgelegte Leiterplatte durch die Abdeckung auf einem Leuchtenbauteil zu fixieren, so dass separate Befestigungselemente, die das Leuchtenbauteil und die Leiterplatte miteinander verbinden, überflüssig sind.

Die in der DE 20 2019 106 117 U1 vorgeschlagene Technik funktioniert prinzipiell gut, ist jedoch bei Abdeckungen, denen lichtaustrittsseitig weitere Leuchtenbauteile, insbesondere Schirmelemente zur Lichtbeeinflussung vorgeordnet sind, nicht ohne weiteres nutzbar, was in der Regel insbesondere den beengten Montageverhältnissen und der erschwerten Einsehbarkeit bei der Leuchtenmontage geschuldet ist.

US 2016/000 34 54 A1 zeigt eine Leuchte mit einer Leiterplatte, auf welcher LED-Lichtquellen angeordnet sind. Die Leiterplatte ist von einer Abdeckung überfangen, die mittels Rastelementen an einem Leuchtenbauteil festlegbar ist. Die Abdeckung ist mit optischen Elementen versehen. Die Leiterplatte wird nicht von der Abdeckung, sondern mit Schrauben an dem Leuchtenbauteil befestigt.

In DE 20 2015 009 561 U1 ist eine Leiterplatte mit LED-Lichtquellen als Teil einer Leuchte gezeigt. Eine Abdeckung überfängt die Leiterplatte und ist über Magnetelemente an einem Leuchtenbauteil gehalten.

US 2016/0215955 A1 zeigt eine Leiterplatte mit LED-Lichtquellen, die eine Reihe von Öffnungen Aufweist. Abdeckungen mit Befestigungselementen können auf die Leiterplatte aufgesetzt werden, wobei die Befestigungselemente hierzu in die Öffnungen der Leiterplatte eingreifen. Aufgabe der Erfindung ist es deshalb, eine Abdeckung zu schaffen, welche die Voraussetzungen für eine vereinfachte und verbesserte Leuchtenmontage bietet.

Gelöst wir die Aufgabe von einer Abdeckung mit den Merkmalen des Anspruchs 1.

Die Abdeckung mit den Merkmalen des Anspruchs 1 ermöglicht es erstmals, die Leiterplatte mit den LED-Lichtquellen durch das Aufsetzen der Abdeckung am Leuchtenbauteil zu befestigen, insbesondere wenn die Befestigungsmittel als das Leuchtenbauteil hintergreifende Rastmittel ausgebildet sind. Durch die Ausnehmungen für Anschlussklemmen in der Abdeckung kann die Verkabelung der Leiterplatte nach dem Aufsetzen der Abdeckung und somit nach dem Festlegen der Leiterplatte erfolgen, da die Anschlussklemmen über die Ausnehmungen der Abdeckung zugänglich sind. Die Ausgestaltung der Ausnehmungen mit einem diese umgebenden Rahmen gewährleisten eine stabile, bruchsichere Abdeckung.

Die Abdeckung trägt auf ihrer Lichtaustrittsseite Anordnungsmittel und Anordnungsflächen für zumindest ein lichtbeeinflussendes Bauteil, insbesondere ein Rasterbauteil, um die Abdeckung für die Konfektionierung von Leuchten vorzusehen, welche der Abdeckung in Lichtaustrittsrichtung nachgeordnete Bauteile erfordern, wobei diese auf der Abdeckung festgelegt sind und von dieser gehalten werden.

Solche in Lichtaustrittsrichtung der Abdeckung nachgeordneten Bauteile sind beispielsweise Reflektoren oder Abschirmelemente, welche aus einzelnen Segmenten bestehen. Die Segmente entsprechend in ihrer Anzahl und Anordnung den Optikelementen der Abdeckung und bilden lichteintrittsseitig eine Öffnung, durch welche das das Optikelement verlassende Licht eintreten kann. Die Segmente erweitern sich in der Regel in etwa trichterförmig in Lichtaustrittsrichtung, wobei die Innenflächen der trichterförmigen Segmente den Lichtausfall aus der Leuchte beeinflussen. Solche, auch als Rasterbauteile oder Rasterelemente bezeichneten Leuchtenteile dienen neben ihrer lichtbeeinflussenden Wirkung auch der optischen Gestaltung der Leuchte und werden häufig in gewerblich genutzten Räumen bei Linien- oder Flächenleuchten genutzt.

Weiterhin trägt die Abdeckung auf ihrer Lichtaustrittsseite wenigstens eine Halterung für ein Anschlusskabel, wobei die Halterung insbesondere außerhalb der Anordnungsflächen für das lichtbeeinflussende Bauteil angeordnet ist, insbesondere wenn die Kabelhalterung zwei einen Aufnahmespalt zwischen sich bildende Haltearme aufweist.

Die von der Abdeckung ausgebildete Kabelhalterung sorgt für eine definierte, geordnete und lagegerechte Anordnung der Anschlusskabel außerhalb von Bereichen, die wie beispielsweise die Optikelemente das Licht beeinflussen. Auf diese Weise wird ein nachteiliger Schattenwurf der Kabel vermieden. Insbesondere ist es aufgrund der geordneten und definierten Lage der Anschlusskabel durch Aufnahme in den Kabelhalterungen möglich, die Anordnungsmittel und Anordnungsflächen für die zusätzlichen lichtbeeinflussenden Bauteile, wie Rasterelemente, freizuhalten und deren Montage wesentlich zu erleichtern.

Um die Platine sicher von der Abdeckung auf einem Leuchtenbauteil festlegen zu können, ist vorgesehen, dass
- die Abdeckung zwei Auflageschenkel aufweist, die den Aufnahmeraum der Aufnahmekammer seitlich begrenzen,
- die Abdeckung eine Deckwand aufweist, welche die Aufnahmekammer zur Oberseite begrenzt,
- die Deckwand die Optikelemente ausbildet und zur Auflage auf der Platine vorgesehen ist.

Zudem ist es in einer besonders bevorzugten Ausführungsform vorgesehen, dass die Auflageschenkel auf ihrer in Lichtaustrittsrichtung abgewandten Unterseite Befestigungsmittel in Form von Rastelementen tragen und auf Ihrer in Lichtaustrittsrichtung ausgerichteten Oberseite zumindest eine Kabelhalterung tragen.

Die erfindungsgemäße Aufgabe wird auch gelöst von einer Leuchte mit den Merkmalen den nebengeordneten Anspruchs 5, welche sich zur Halterung der Leiterplatte sowie zur Befestigung eines lichtaustrittsseitig der Abdeckung nachgeordneten lichtbeeinflussenden Bauteils der Abdeckung nach unabhängigem Anspruch 1 bzw. der auf diesen rückbezogenen Unteransprüche bedient.

Weitere Vorteile der Erfindung sowie ein besseres Verständnis derselben folgen aus der Beschreibung eines Ausführungsbeispiels. Es zeigen:
- Fig. 1: die erfindungsgemäße Abdeckung in perspektivischer Darstellung und Ansicht auf die Lichtaustrittsseite,
- Fig. 2: Abdeckung gemäß Figur 1 in perspektivischer Darstellung und Ansicht auf die Lichteintrittsseite,
- Fig. 3: die Darstellung einer erfindungsgemäßen Leuchte,
- Fig. 4: die Leuchte gemäß Figur 3 in Explosionsdarstellung und
- Fig. 5: ein Querschnitt durch die Leuchte gemäß Figur 3.

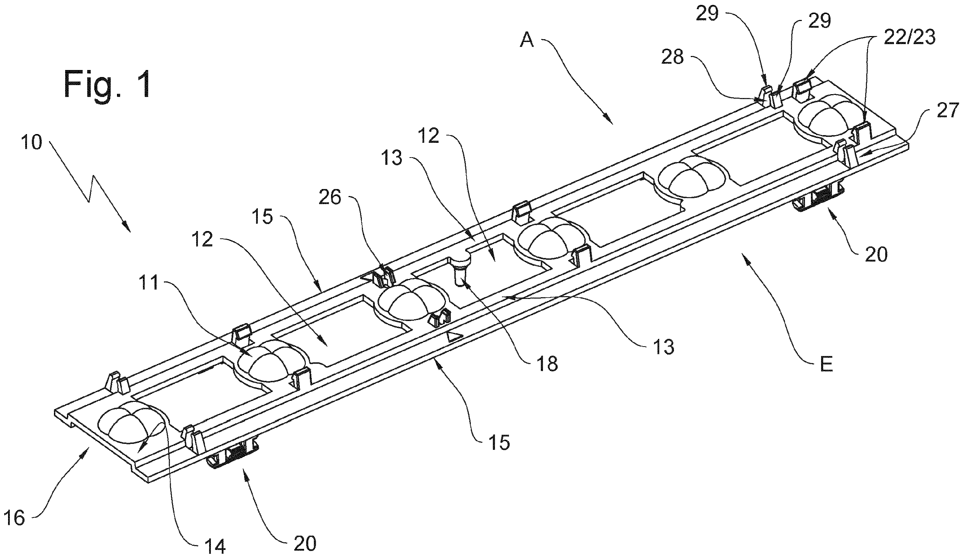

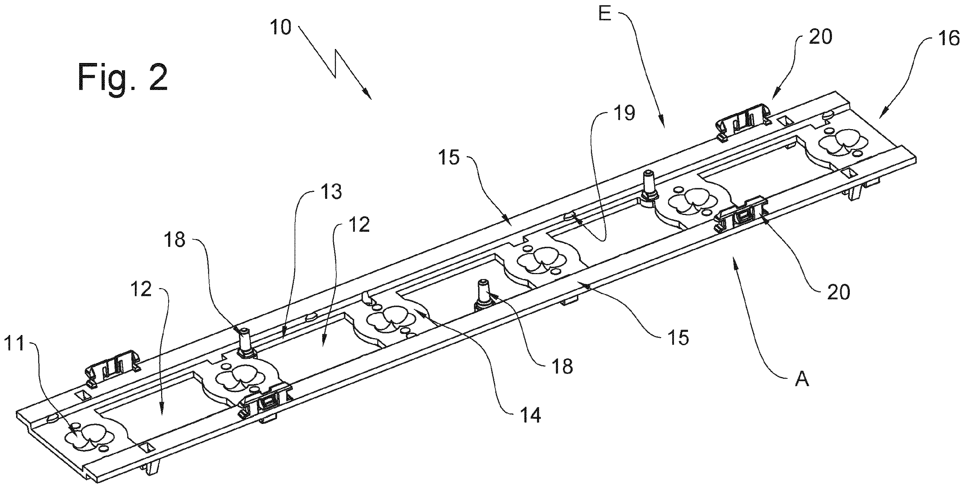

In den Figuren ist eine erfindungsgemäße Abdeckung insgesamt mit der Bezugsziffer 10 versehen. Die Abdeckung 10 ist in den Figuren 1 und 2 in Perspektive dargestellt. Figur 1 zeigt die Abdeckung 10 in Ansicht auf die Lichtaustrittsseite A, Figur 2 zeigt die Abdeckung 10 in Ansicht auf die Lichteintrittsseite E. Die Lichtaustrittsseite A kann auch als Oberseite der Abdeckung 10 bezeichnet werden, die Lichteintrittsseite E als Unterseite.

Die Abdeckung 10 verfügt über in Reihe hintereinander angeordnete Optikelemente 11, zwischen welchen Ausnehmungen 12 gebildet sind. Die Ausnehmungen 12 sind Freischnitte in der Abdeckung 10, welche von zwei benachbarten Optikelementen 11 und zwei gegenüberliegenden Schenkeln 13 eingefasst bzw. eingerahmt sind. Die Optikelemente 11 werden von der Deckwand 14 der Abdeckung 10 ausgebildet, die an ihren einander gegenüberliegenden Längsseiten jeweils einen Auflageschenkel 15 trägt. Die Anordnungsebene der Auflageschenkel 15 ist gegenüber der Anordnungsebene der Deckwand 14 versetzt, so dass die Deckwand 14 mit den seitlichen Auflageschenkeln 15 eine Aufnahmekammer 16 herstellt, in deren Aufnahmeraum eine später beschriebene Leiterplatte 17 einsitzen kann. Die Aufnahmekammer 16 befindet sich auf der Lichteintrittsseite E der Abdeckung 10. Auf der Lichteintrittsseite E sind im Bereich der Aufnahmekammer 16 darüber hinaus Positionierstifte 18 angeordnet, die in Positionieröffnungen der Leiterplatte 17 und eines Leuchtenbauteils eingreifen, um das Leuchtenbauteil, die Leiterplatte 17 und die Abdeckung 10 lagegerecht zueinander zu positionieren.

Die Auflageschenkel 15 verfügen über parallel zur Unterseite gerichtete und in die Aufnahmekammer 16 vorspringende Klemmnasen 19, welche zur Anlage an den Rändern der Leiterplatte 17 vorgesehen sind. Schließlich trägt jeder Auflageschenkel 15 Rastelemente 20, mittels derer die Abdeckung 10 an einem im weiteren zu beschreibenden Leuchtenbauteil 21 festlegbar ist.

Auf der Lichtaustrittsseite A trägt die Abdeckung 10 zunächst Anordnungsmittel 22 in Form von Rastnasen 23 zur Befestigung eines lichtbeeinflussenden Bauteils 24 in Form eines Rasterelementes 25 an der Abdeckung 10 festlegen lässt. Des Weiteren finden sich Positionierarme 26 auf der Lichtaustrittsseite A der Abdeckung 10, mittels derer das Rasterelement 25 lagekorrekt zu den Optikelementen 11 der Abdeckung 10 ausrichtbar ist. Schließlich trägt die Abdeckung 10 auf ihrer Lichtaustrittsseite A, genauer auf den Auflageschenkeln 15 Halterungen 27 für Anschlusskabel, die von zwei einen Aufnahmespalt 28 zwischen sich bildenden Haltearmen 29 bereitgestellt werden.

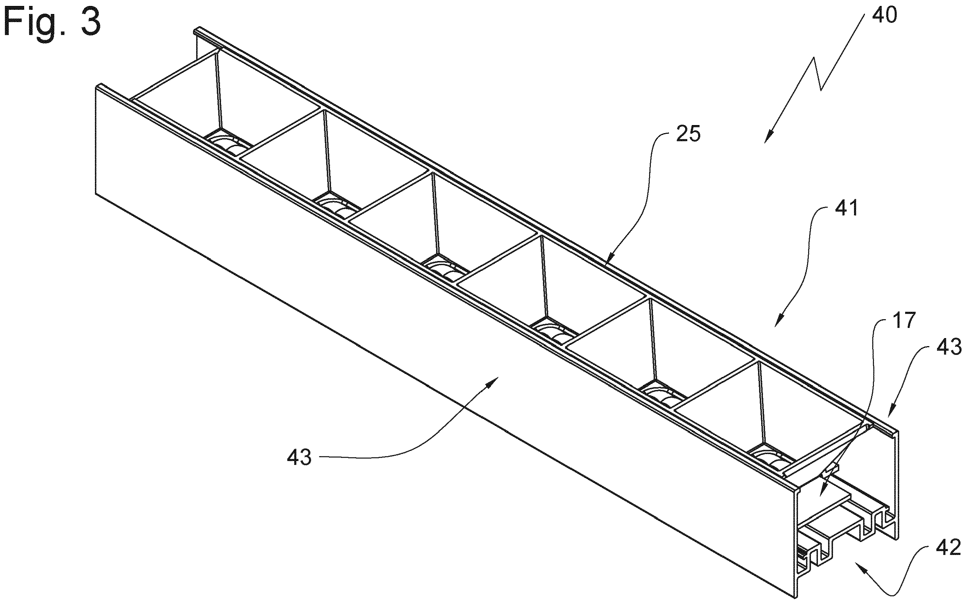

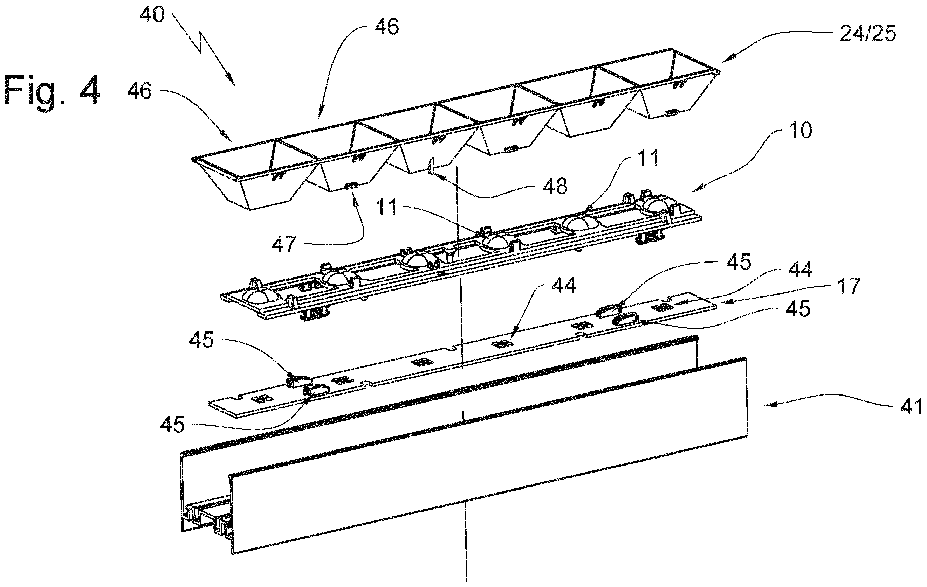

Figur 3 zeigt eine erfindungsgemäße Leuchte 40, in zusammengesetztem Zustand. Figur 4 zeigt die Leuchte 40 gemäß Figur 3 in Explosionsdarstellung. Die Leuchte 40 verfügt zunächst über Leuchtengehäuse 41, welches in etwa U-förmig ausgebildet ist. Ein Gehäuseboden 42 trägt zwei in Lichtaustrittsrichtung A angeordnete Gehäuseschenkel 43, die zwischen sich die Leiterplatte 17, die Abdeckung 10 sowie das Rasterelemente 25 aufnehmen.

Die Explosionsansicht gemäß Figur 4 zeigt, dass auf der Platine in Reihe hintereinander und zueinander beabstandet einzelne LED-Lichtquellen 44 angeordnet sind, wobei in den Zwischenräumen zwischen benachbarten LED-Lichtquellen 44 teilweise Anschlussklemmen 45 auf der Platine angebracht sind. Diese Anschlussklemmen 25 dienen einerseits der Spannungsversorgung, können jedoch andererseits auch der Anbindung von Steuerleitungen dienen.

Das Rasterelement 25 besteht aus einzelnen Segmenten 46, die in Anzahl und Anordnung den LED-Lichtquellen 44 bzw. den diese überfangenden Optikelementen 11 entsprechen. Die Segmente 46 weisen eine hier nicht dargestellte Lichteintrittsöffnung auf, welche jeweils ein zugeordnetes Optikelement aufnimmt. In Lichtaustrittsöffnung sind die einzelnen Segmente 46 trichterartig erweitert. Jedes Segment 46 kann mit einer reflektierenden Innenoberfläche versehen sein und somit als Reflektor dienen. Es ist jedoch auch möglich, die Segmente als Schirmelemente ohne Reflektionseigenschaft zu nutzen.

Einige der Segmente 46 tragen Rastvorsprünge 47, die von den abdeckungsseitigen Rastnasen 23 zur Festlegung des Rasterelementes 25 auf der Abdeckung 10 hintergriffen werden. Positionierbeine 48 wirken mit den abdeckungsseitigen Positionierarmen 26 zusammen, um eine lagegerechte Zuordnung der einzelnen Segmente 46 des Rasterelementes 25 zu den jeweiligen Optikelementen 11 der Abdeckung 10 zu gewährleisten.

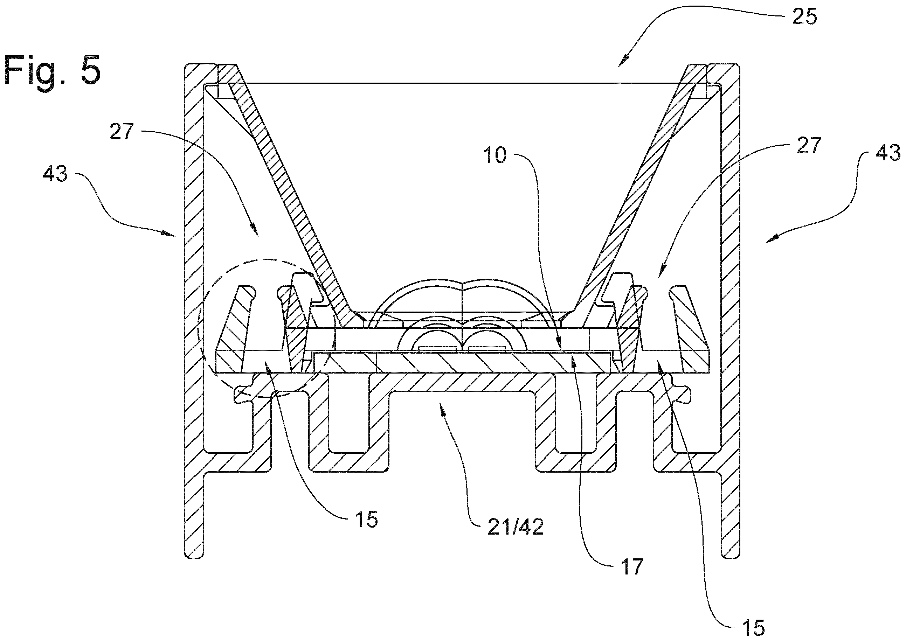

Aus der Figur 5, einem Querschnitt durch die Leuchte 40 ist ersichtlich, wie die einzelnen Bauteile miteinander zusammenwirken. Der Gehäuseboden 42, welcher hier auch allgemein als Leuchtenbauteil zur Befestigung der Abdeckung 10 mittels deren Rastelementen 20 bezeichnet wurde, dient zunächst der Auflage der Platine 17. Sodann ist die Abdeckung 10 auf dem Gehäuseboden 42 angeordnet, wobei lediglich ihre Auflageschenkel 15 auf dem Gehäuseboden 42 aufliegen. Die von den Auflageschenkeln 15 und der Deckwand 14 gebildete Aufnahmekammer (in Figur 5 ohne Bezugszeichen) nimmt die Platine 17 auf. Durch Verrasten der Abdeckung 10 am Gehäuseboden 42 wird die Platine 17 im Leuchtengehäuse festgelegt.

Nach dem Anschließen der nicht dargestellten Anschlusskabel an die Anschlussklemmen 45 wird das Rasterelement 25 in das Leuchtengehäuse 41 eingesetzt, wobei der abdeckungsferne Rand an den freien Enden der Gehäuseschenkel 43 anliegt und idealerweise dort verrastet. Die Kabelhalterung 27 der Abdeckung 10 befinden sich seitlich der Aufnahmeöffnungen der Segmente 46 und außerhalb von denen sich trichterförmig erweiternden Innenraum, so dass dort einliegende und geführte Kabel außerhalb der von der Abdeckung gebildeten Anordnungsflächen und Anordnungsmittel 22 bzw. Rastnasen 23 eingenommene Bereiche liegen.

Der wesentliche Vorteil der Erfindung liegt also darin, dass die Leiterplatte von der Abdeckung 10 am Gehäuseboden 42 der Leuchte 40 festgelegt werden kann, ohne dass separate Befestigungsmittel für die Leiterplatte 17 zu nutzen sind. Nach Festlegung der Leiterplatte 17 am Gehäuseboden 42 werden die Anschluss- und/oder Steuerleitungen an den Anschlussklemmen 45 angebunden und über die erfindungsgemäßen Halterungen 27 in einem definierten Bereich der Abdeckung 10, nämlich oberhalb der Auflageschenkel 15 geführt. Das Rasterelement 25 kann so einfach und ohne Kollision mit Anschluss- und/oder Steuerleitungen in den Raum zwischen den Gehäuseschenkeln 43 eingesetzt und dort wie auch auf der Abdeckung 10 verrastet werden.

Die Abdeckung 10 vereinfacht somit die Montage der Leuchte 40 wesentlich, indem sie einerseits die Platine 17 zu halten in der Lage ist und andererseits die erforderlichen Steuer- und/oder Anschlussleiter in einem für die Montage des Rasterelementes 25 unerheblichen Bereich führt.

**Bezugszeichenliste**

| | | | |
|---|---|---|---|
| 10 | Abdeckung | A | Lichtaustrittsseite |
| 11 | Optikelement | E | Lichteintrittsseite |
| 12 | Ausnehmung | | |
| 13 | Schenkel | | |
| 14 | Deckwand | | |
| 15 | Auflageschenkel | | |
| 16 | Aufnahmekammer | | |
| 17 | Leiterplatte | | |
| 18 | Positionierstift | | |
| 19 | Klemmnase | | |
| 20 | Rastelemente | | |
| 21 | Leuchtenbauteil | | |
| 22 | Anordnungsmittel | | |
| 23 | Rastnase | | |
| 24 | lichtbeeinflussendes Bauteil | | |
| 25 | Rasterelement | | |
| 26 | Positionierarm | | |
| 27 | Halterung für Anschlusskabel | | |
| 28 | Aufnahmespalt | | |
| 29 | Haltearm | | |
| 40 | Leuchte | | |
| 41 | Leuchtengehäuse | | |
| 42 | Gehäuseboden | | |
| 43 | Gehäusedeckel | | |
| 44 | LED-Lichtquelle | | |
| 45 | Anschlussklemme | | |
| 46 | Segment | | |
| 47 | Rastvorsprung | | |
| 48 | Positionierbein | | |

## Patentansprüche

1. Abdeckung (10) für eine Leiterplatte (17), die LED-Lichtquellen (44) und Anschlussklemmen (45) für Anschlusskabel auf ihrer Oberseite trägt,
- mit einer von der Abdeckung (10) ausgebildeten Aufnahmekammer (16) für die Leiterplatte (17),
- mit einer Lichteintrittsseite (E) der Abdeckung (10), die der Aufnahmekammer (16) zugewandt ist,
- mit einer Lichtaustrittsseite (A) der Abdeckung (10), die der Lichteintrittsseite (E) gegenüberliegt,
- mit Befestigungsmitteln (20) zur Anordnung der Abdeckung (10) an einem Leuchtenbauteil (21),
- mit Optikelementen (11), die über den LED-Lichtquellen (44) zur Anordnung kommen und das emittierte Licht richten, wobei
- die Abdeckung (10) zwischen zwei benachbarten Optikelementen (11) eine Ausnehmung (12) für zumindest eine Anschlussklemme (45) ausbildet,
- die Ausnehmung (12) von einem durch die Abdeckung (10) ausgebildeten Rahmen umgeben ist,
**dadurch gekennzeichnet, dass**
- die Abdeckung (10) auf ihrer Lichtaustrittsseite (A) Anordnungsmittel (22) und Anordnungsflächen für zumindest ein lichtbeeinflussendes Bauteil (24), insbesondere ein Rasterbauteil (25), trägt,
- die Abdeckung (10) auf ihrer Lichtaustrittsseite (A) wenigstens eine Halterung (27) für ein Anschlusskabel trägt, wobei die Halterung (27) insbesondere außerhalb der Anordnungsflächen für das lichtbeeinflussende Bauteil (24) angeordnet ist,

2. Abdeckung (10) nach Anspruch 1, **dadurch gekennzeichnet, dass** die Kabelhalterung (27) zwei einen Aufnahmespalt (28) zwischen sich bildende Haltearme (29) aufweist.

3. Abdeckung (10) nach einem der vorhergehenden Ansprüche, **dadurch gekennzeichnet, dass**
- die Abdeckung (10) zwei Auflageschenkel (15) aufweist, die den Aufnahmeraum der Aufnahmekammer (16) seitlich begrenzen,
- die Abdeckung (10) eine Deckwand (14) aufweist, welche die Aufnahmekammer (16) zur Oberseite begrenzt,
- die Deckwand (14) die Optikelemente (11) ausbildet und zur Auflage auf der Platine (17) vorgesehen ist.

4. Abdeckung (10) nach Anspruch 1 und 3, **dadurch gekennzeichnet, dass** die Auflageschenkel (15) auf ihrer in Lichtaustrittsrichtung abgewandten Unterseite Befestigungsmittel in Form von Rastelementen (20) tragen und auf Ihrer in Lichtaustrittsrichtung ausgerichteten Oberseite zumindest eine Kabelhalterung (27) tragen.

5. Leuchte (40) mit einem Leuchtengehäuse (41), welches eine in etwa U-förmige Leuchtmittelaufnahme ausbildet, auf deren Boden eine Leiterplatte (17) mit LED-Lichtquellen (44) aufliegt und deren Schenkel sich in Lichtaustrittsrichtung erstrecken,
- mit einer Abdeckung (10) nach einem der Ansprüche 1 bis 4, die die Leiterolatte (17) überfangt und mittels deren Befestiounosmitteln (20) die Leiterplatte (17) auf dem Boden fixiert ist,
- mit einem lichtbeeinflussenden Bauteil (24), welches einerseits auf der Abdeckung (10) aufsitzt und andererseits zwischen den Schenkeln (13) der Leuchtmittelaufnahme einsitzt.

## Claims

1. Cover (10) for a circuit board (17) that has LED light sources (44) and connection terminals (45) for connection cables on its upper surface,
- having a receiving chamber (16) for the circuit board (17) formed from the cover (10),
- having a light input side (E) of the cover (10), which faces the receiving chamber (16),
- having a light output side (A) of the cover (10), which is opposite the light input side (E),
- having fastening means (20) for arranging the cover (10) on a light component (21),
- having optical elements (11) that are arranged above the LED light sources (44) and direct the emitted light, wherein
- the cover (10) forms a recess (12) for at least one connection terminal (45) between two adjacent optical elements (11),
- the recess (12) is surrounded by a frame formed by the cover (10),
**characterised in that**
- the cover (10) has arranging means (22) and arrangement surfaces for at least one light-influencing component (24), in particular a screen component (25), on its light output side (A),
- the cover (10) has at least one bracket (27) for a connection cable on its light output side (A), wherein the bracket (27) is in particular arranged outside the arrangement surfaces for the light-influencing component (24).

2. Cover (10) according to claim 1, **characterised in that** the cable bracket (27) has two holding arms (29) that form a receiving slot (28) between them.

3. Cover (10) according to one of the preceding claims, **characterised in that**
- the cover (10) has two supporting arms (15) that laterally define the receiving space of the receiving chamber (16),
- the cover (10) has a top wall (14), which defines the receiving chamber (16) at the top,
- the top wall (14) forms the optical elements (11) and is provided for support on the board (17).

4. Cover (10) according to claims 1 and 3, **characterised in that** the supporting arms (15) have fastening means in the form of latching elements (20) on their underside that is facing away from the light output direction and have at least one cable bracket (27) on their upper side that is aligned in the light output direction.

5. Light (40) having a light housing (41),that forms an approximately U-shaped light source holder, on the base of which a circuit board (17) having LED light sources (44) rests and the arms of which extend in the light output direction,
- having a cover (10) according to one of claims 1 to 4, which overlays the circuit board (17), and by means of whose fastening means (20) the circuit board (17) is fixed to the base,
- having a light-influencing component (24), which both rests on the cover (10) and is also held between the arms (13) of the light source holder.

## Revendications

1. Couvercle (10) pour une carte de circuits imprimés (17), comportant sur sa face supérieure des sources de lumière à DEL (44) et des bornes de raccordement (45) destinées à des câbles de raccordement,
- comprenant une chambre de réception (16) pour la carte de circuits imprimés (17) formée par le couvercle (10),
- présentant un côté d'entrée de lumière (E) du couvercle (10) qui est orienté en direction de la chambre de réception (16),
- présentant un côté de sortie de lumière (A) du couvercle (10) qui est situé en face du côté d'entrée de lumière (E),
- comprenant des moyens de fixation (20) destinés à agencer le couvercle (10) sur un élément d'éclairage (21), et
- comprenant des éléments optiques (11) qui viennent se placer au-dessus des sources de lumière à DEL (44) dans le but d'orienter la lumière émise, dans lequel
- le couvercle (10) forme entre deux éléments optiques voisins (11) un évidement (12) qui est destiné à recevoir au moins une borne de raccordement (45), et
- l'évidement (12) est entouré d'un cadre qui est constitué par le couvercle (10),
**caractérisé en ce que**
- des moyens de positionnement (22) et des surfaces d'agencement prévues pour au moins un élément influençant la lumière (24), en particulier un élément de grille (25), sont prévus sur le côté de sortie de lumière (A) du couvercle (10), et
- un support (27) pour un câble de raccordement est prévu sur le côté de sortie de lumière (A) du couvercle (10), ledit support (27) étant en particulier agencé à l'extérieur des surfaces d'agencement prévues pour ledit au moins un élément influençant la lumière.

2. Couvercle (10) selon la revendication 1, **caractérisé en ce que** le support de câble (27) est pourvu de deux bras de retenue (29) qui forment entre eux une fente de réception (28).

3. Couvercle (10) selon l'une quelconque des revendications précédentes, **caractérisé en ce que**
- le couvercle (10) est pourvu de deux branches d'appui (15) qui délimitent latéralement l'espace de réception de la chambre de réception (16),
- le couvercle (10) comprend une paroi de recouvrement (14) qui délimite la chambre de réception (16) en direction du côté supérieur, et
- la paroi de recouvrement (14) forme les éléments optiques (11) et est conçue de manière à être posée sur la carte de circuits imprimés (17).

4. Couvercle (10) selon les revendications 1 et 3, **caractérisé en ce que** les branches d'appui (15) sont pourvues de moyens de fixation qui se présentent sous la forme d'éléments d'encliquetage sur leur face inférieure opposée à la direction de sortie de lumière, et sont pourvues d'au moins un support de câble (27) sur leur face supérieure orientée dans la direction de sortie de lumière.

5. Luminaire (40) comprenant un boîtier de luminaire (41), qui constitue un logement de moyen d'éclairage approximativement en forme de U, sur la face duquel repose une carte de circuits imprimés (17) comportant des sources de lumière à DEL (44) et dont les branches s'étendent dans la direction de sortie de lumière,
- comprenant un couvercle (10) selon l'une quelconque des revendications 1 à 4 qui recouvre la carte de circuits imprimés (17) et dont les moyens de fixation (20) permettent de fixer la carte de circuits imprimés (17) au sol, et
- comprenant un élément influençant la lumière qui, d'une part, repose sur le couvercle (10), et qui d'autre part s'insère entre les branches (13) du logement de moyen d'éclairage.
